# FASCICULE DE BREVET EUROPEEN

(11) **EP 3 283 734 B1**
(45) Date de publication et mention de la délivrance du brevet: **27.03.2019**
(21) Numéro de dépôt: 16717316.0
(22) Date de dépôt: 12.04.2016
(51) Int. Cl.: F01D 25/10, F02C 1/04, F02C 6/16

(54) **SYSTEME ET PROCEDE DE STOCKAGE ET DE RECUPERATION D'ENERGIE PAR AIR COMPRIME AVEC CHAUFFAGE A VOLUME CONSTANT**
SYSTEM UND VERFAHREN FÜR DRUCKLUFTSPEICHER UND ENERGIERÜCKGEWINNUNG MIT ERWÄRMUNG BEI KONSTANTEM VOLUMEN
SYSTEM AND METHOD FOR COMPRESSED AIR ENERGY STORAGE AND RECOVERY WITH CONSTANT VOLUME HEATING

(30) Priorité: 13.04.2015 FR 1553200
(43) Date de publication de la demande: 21.02.2018
(73) Titulaire: IFP Energies nouvelles, 92500 Rueil-Malmaison (FR)
(72) Inventeur: TEIXEIRA, David, 92500 Rueil-Malmaison (FR)
(74) Mandataire: IFP Energies nouvelles
(86) Numéro de dépôt international: PCT/EP2016/058001
(87) Numéro de publication internationale: WO 2016/166095

(56) Documents cités:
- WO-A1-2005/122389
- SU-A1- 1 097 816
- US-A1- 2015 000 248
- ULRICH DÄMGEN: "Neuer Entwicklungsanzatz bei Druckluftspeichern", BWK BRENNSTOFF WARME KRAFT, SPRINGER VDI VERLAG, DUSSELDORF, DE, vol. 65, no. 1, 1 janvier 2013 (2013-01-01), pages 70-73, XP001582171, ISSN: 1618-193X

## Description

Le domaine de la présente invention concerne le stockage d'énergie par air comprimé (CAES de l'anglais « Compressed Air Energy Storage »). En particulier, la présente invention concerne un système AACAES (de l'anglais « Advanced Adiabatic Compressed Air Energy Storage ») dans lequel est prévu le stockage de l'air et le stockage de la chaleur générée.

La volonté politique de diminuer les gaz à effets de serre, ou encore, le souhait de diminuer la dépendance énergétique aux énergies fossiles entraine une augmentation de la part des énergies renouvelables dans les mix énergétiques. Ces énergies renouvelables peuvent être des systèmes éoliens et/ou solaires (photovoltaïque ou thermodynamique). Les principaux défauts de ces systèmes sont leurs fluctuations au cours du temps ainsi que l'indépendance entre production et besoin.

Pour l'éolien, par exemple, le vent peut être présent lorsqu'il n'y a pas de besoin de consommation et absent lors des besoins. Il est également possible que le vent varie autour d'une valeur et conduit à une production électrique fluctuante problématique pour le réseau électrique.

L'introduction d'énergies renouvelables intermittentes dans le mix énergétique ne pose pas de problème si le réseau est robuste, et si l'énergie intermittente non contrôlable ne représente qu'une petite partie de l'énergie. Dans le cas d'un fort taux d'énergies intermittentes, des moyens de production énergétique de secours doivent être présents sur le réseau. Or ces moyens de secours sont, pour des raisons économiques, souvent des systèmes producteurs de gaz à effets de serre. Si la part des énergies intermittentes devient importante, des fluctuations peuvent apparaître dans le réseau et un déséquilibre temporel entre l'offre et la demande peut se produire. Ce déséquilibre est dû au fait que, même si la consommation annuelle est satisfaite par la production, il peut exister un décalage entre le moment de production de l'énergie et le besoin de consommation.

Afin de surmonter cette difficulté, plusieurs solutions ont été proposées, parmi lesquelles le stockage d'énergie. Le but est de stocker l'électricité quand elle est produite, puis de la restituer lors des besoins. L'électricité ne pouvant être stockée directement, il faut tout d'abord la transformer. Cette transformation peut être chimique, électrochimique ou mécanique. Par exemple, cette transformation peut être une transformation en énergie mécanique sous forme d'air comprimé et/ou de chaleur.

Dans un système de stockage d'énergie par air comprimé (CAES), l'énergie, que l'on souhaite utiliser à un autre moment, est stockée sous forme d'air comprimé. Pour le stockage, une énergie, notamment électrique, entraîne des compresseurs d'air, et pour le déstockage, l'air comprimé entraîne des turbines, qui peuvent être reliées à une génératrice électrique. Le rendement de cette solution n'est pas optimal car une partie de l'énergie de l'air comprimé se retrouve sous forme de chaleur qui n'est pas utilisée. En effet, dans les procédés CAES, on n'utilise que l'énergie mécanique de l'air, c'est-à-dire qu'on rejette toute la chaleur produite lors de la compression. De plus, le rendement d'un système CAES n'est pas optimal, car le système nécessite de chauffer l'air stocké pour réaliser la détente de l'air. En effet, à titre d'exemple, si l'air est stocké à 8 MPa (80 bar) et à température ambiante et si l'on désire récupérer l'énergie par une détente, la décompression de l'air suivra une courbe isentropique à partir des conditions initiales de stockage (environ 8 MPa et 300 K). L'air se refroidit donc jusqu'à des températures non réalistes (83 K soit -191°C). Il est donc nécessaire de le réchauffer, ce qui peut se faire à l'aide d'un brûleur à gaz, ou autre carburant.

Plusieurs variantes de ce système CAES existent actuellement. On peut citer notamment les systèmes et procédés :
- ACAES (de l'anglais « Adiabatic Compressed Air Energy Storage ») dans lequel l'air est stocké de manière adiabatique à la température due à la compression. Toutefois, ce type de système nécessite un système de stockage spécifique volumineux et coûteux.
- AACAES (de l'anglais « Advanced Adiabatic Compressed Air Energy Storage ») dans lequel l'air est stocké à température ambiante, et la chaleur due à la compression est également stockée dans un système de stockage de la chaleur TES (de l'anglais « Thermal Energy Storage »). La chaleur stockée dans le TES est utilisée pour chauffer l'air avant sa détente.

Lorsque la mise en oeuvre du stockage d'énergie par air comprimé compte plusieurs étages de compression, il est envisageable de stocker la chaleur des étages intermédiaires de compression dans un système dédié à la chaleur ; et de stocker l'air chaud en sortie du dernier compresseur dans un réservoir pressurisé. On obtient ainsi une mise en oeuvre entre le ACAES et le AACAES.

Des perfectionnements des systèmes AACAES ont porté sur la réalisation du système de stockage de chaleur TES au moyen d'un réservoir fixe de matériau de stockage de la chaleur. Une autre solution envisagée pour le système de stockage de chaleur TES est l'utilisation d'un fluide caloporteur permettant de stocker la chaleur issue de la compression pour la restituer à l'air avant la détente au moyen d'échangeurs de chaleur. Par exemple, la demande de brevet EP 2447501 décrit un système AACAES dans lequel de l'huile, utilisée en tant que fluide caloporteur, circule en circuit fermé pour échanger de la chaleur avec l'air. Par ailleurs, les demandes de brevet EP 2530283 et WO 2011053411 décrivent un système AACAES, dans lequel les échanges de chaleur sont réalisés par un fluide caloporteur circulant dans un circuit fermé, le circuit fermé comprenant un réservoir de fluide caloporteur.

D'autres exemples de systèmes de stockage et de récupération d'énergie sont également mentionnés dans les demandes de brevets WO 2005/ 122 389 et US 2015/ 000 248.

Les moyens de compression et de détente ne sont pas parfaits. C'est pourquoi, le rendement de ces dispositifs de compression et de détente implique qu'il n'est pas possible de récupérer, à la détente, la totalité de l'énergie introduite à la compression.

Pour augmenter la quantité d'énergie récupérée, l'invention concerne un système et un procédé de stockage et de récupération d'énergie par gaz comprimé, du type AACAES. Le système et le procédé selon l'invention mettent en oeuvre un chauffage à volume constant du gaz comprimé stocké, ce qui permet d'augmenter la pression du gaz comprimé stocké, ce qui permet une meilleure efficacité du système et du procédé.

### Le système et le procédé selon l'invention

L'invention concerne un système de stockage et de récupération d'énergie par gaz, conforme aux caractéristiques de la revendication 1, comprenant au moins un moyen de compression dudit gaz, un moyen de stockage dudit gaz comprimé, au moins un moyen de détente dudit gaz comprimé apte à générer une énergie, des moyens d'échange de chaleur entre ledit gaz comprimé et un fluide caloporteur. Le système comporte en outre des moyens de chauffage à volume constant dudit gaz comprimé stocké.

Selon l'invention, lesdits moyens de chauffage à volume constant comprennent des moyens d'échange de chaleur entre ledit gaz comprimé stocké et ledit fluide caloporteur.

Selon une variante de réalisation de l'invention, ledit moyen de stockage dudit gaz comprimé comprend au moins un réservoir de forme sensiblement cylindrique comportant au moins un cylindre interne et/ou externe dans lequel circule ledit fluide caloporteur.

Avantageusement, lesdits moyens d'échange de chaleur disposés entre ledit moyen de compression et ledit moyen de stockage dudit gaz comprimé est un échangeur de chaleur étagé apte à stocker au moins ledit fluide caloporteur à différentes températures, lesdits moyens de chauffage à volume constant étant aptes à chauffer ledit gaz comprimé de manière successive par ledit fluide caloporteur stocké aux différentes températures.

Selon un mode de réalisation de l'invention, lesdits moyens de chauffage à volume constant sont intégrés dans ledit moyen de stockage du gaz comprimé.

Alternativement, lesdits moyens de chauffage à volume constant comprennent au moins une chambre de chauffage à volume constant, ladite chambre de chauffage étant externe au moyen de stockage du gaz comprimé.

Selon une caractéristique, lesdits moyens de chauffage à volume constant comprennent des moyens d'échange de chaleur avec une source de chaleur externe.

Selon un aspect, ledit moyen de stockage du gaz comprimé est constitué d'une pluralité de volumes de stockage connectés entre eux.

Selon une caractéristique, ledit moyen de compression est réversible pour être utilisé en tant que moyen de détente.

De préférence, le système comporte une pluralité de moyens de compression entre lesquels sont disposés des moyens d'échange de chaleur, et une pluralité de moyens de détente entre lesquels sont disposés des moyens d'échange de chaleur.

De manière avantageuse, lesdits moyens d'échange de chaleur sont des moyens d'échange de chaleur à pression constante.

En outre, l'invention concerne un procédé de stockage et de récupération d'énergie par gaz comprimé, conforme aux étapes de la revendication 11, dans lequel on réalise les étapes suivantes :
a) on comprime un gaz ;
b) on refroidit le gaz comprimé par échange de chaleur avec un fluide caloporteur ;
c) on stocke le gaz comprimé refroidi ;
d) on chauffe à volume constant le gaz comprimé stocké ; et
e) on détend le gaz comprimé chauffé pour générer une énergie.

Selon l'invention, l'étape de chauffage à volume constant du gaz est réalisée au moyen dudit fluide caloporteur.

Avantageusement, pour l'étape de chauffage à volume constant du gaz, on fait circuler ledit fluide caloporteur dans un réservoir de stockage du gaz comprimé de forme sensiblement cylindrique.

Selon un mode de réalisation de l'invention, l'étape de chauffage à volume constant du gaz est réalisée au sein d'un moyen de stockage du gaz comprimé.

Alternativement, l'étape de chauffage à volume constant du gaz est réalisée au sein d'une chambre de chauffage à volume constant externe à un moyen de stockage du gaz comprimé.

Selon une caractéristique, l'étape de chauffage à volume constant du gaz est réalisée au moins partiellement au moyen d'une source de chaleur externe.

Selon un aspect de l'invention, le procédé comporte une étape de chauffage du gaz comprimé au moyen d'un fluide caloporteur avant l'étape de détente.

De préférence, les étapes de compression et de refroidissement sont répétées au moyen d'une pluralité de moyens de compression et de moyens d'échange de chaleur avec ledit fluide caloporteur et dans lequel l'étape de détente est répétée au moyen d'une pluralité de moyens de détente et de moyens d'échange de chaleur avec le fluide caloporteur.

De manière avantageuse, on stocke ledit fluide caloporteur.

Selon une variante de réalisation, on refroidit le gaz comprimé de manière étagée en stockant le fluide caloporteur à différentes températures, et on réalise l'étape de chauffage à volume constant par échanges de chaleur successifs avec le fluide caloporteur à différentes températures.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 illustre un système de stockage et de récupération d'énergie selon un mode de réalisation de l'invention.
La figure 2 illustre un mode de réalisation d'un moyen de stockage de gaz comprimé selon un mode de réalisation de l'invention.
La figure 3 illustre une variante de réalisation du système de la figure 1.
La figure 4 représente une deuxième variante de réalisation du système de la figure 1.
La figure 5 illustre un deuxième mode de réalisation selon l'invention du système de stockage et de récupération d'énergie.

### Description détaillée de l'invention

La présente invention concerne un système de stockage et de récupération d'énergie par gaz comprimé équipé d'un moyen de stockage de la chaleur (AACAES). Dans cette mise en oeuvre, l'air est stocké froid. Cet air peut être stocké à volume constant. Le système selon l'invention comporte :
- au moins un moyen de compression de gaz (ou compresseur), et de préférence plusieurs moyens de compression de gaz étagés. Le moyen de compression de gaz peut être entraîné par un moteur, notamment un moteur électrique,
- au moins un moyen de stockage du gaz comprimé (appelé également réservoir) par le moyen de compression du gaz. Le moyen de stockage du gaz comprimé peut être un réservoir naturel ou non (par exemple une cavité souterraine). Le moyen de stockage du gaz comprimé peut être en surface ou en sous-sol. De plus, il peut être formé d'un unique volume ou d'une pluralité de volumes connectés entre eux ou non,
- au moins un moyen de détente du gaz (appelé également détendeur ou turbine) permettant de détendre le gaz comprimé et stocké et de préférence plusieurs moyens de détente de gaz étagés. Le moyen de détente du gaz permet de générer une énergie, notamment une énergie électrique au moyen d'un générateur,
- des moyens d'échange de chaleur, entre le gaz comprimé et un fluide caloporteur pour refroidir le gaz comprimé en sortie du moyen de compression de gaz et/ou pour chauffer le gaz comprimé en entrée du moyen de détente du gaz. De préférence, les échanges de chaleur sont réalisés à pression constante. De plus, le fluide caloporteur peut être liquide ou gazeux, contenir des particules ou non, et/ou contenir ou non des capsules de matériau à changement de phase. Le fluide caloporteur permet le stockage de la chaleur,
- des moyens de chauffage à volume constant du gaz comprimé stocké de manière à chauffer le gaz comprimé stocké avant son passage dans les moyens de détente. La réalisation du chauffage à volume constant permet une augmentation de la température et de la pression du gaz avant la détente (l'augmentation induite de la pression peut se déduire notamment de la loi des gaz parfaits), ce qui permet une augmentation de l'énergie récupérée par le système et le procédé selon l'invention. En effet, lorsque l'on souhaite obtenir de l'énergie mécanique à partir d'un gaz chaud sous pression à travers une turbine, on peut considérer que la température chaude correspond à l'énergie disponible et que la haute pression correspond à la possibilité de récupérer l'énergie. Ainsi, un chauffage à volume constant (avec augmentation de la pression) est plus avantageux qu'un chauffage à pression constante, tel que réalisé dans un échangeur de chaleur. Afin d'éviter les pertes de chaleur, ce chauffage à volume constant est mis en oeuvre juste avant la récupération d'énergie lors de la phase de détente, ce qui correspond à la fin du stockage du gaz comprimé.

On utilise les termes « moyens de compression ou de détente étagés », lorsque une pluralité de moyens de compression ou détente sont montés successivement les uns après les autres en série : le gaz comprimé ou détendu en sortie du premier moyen de compression ou de détente passe ensuite dans un deuxième moyen de compression ou de détente et ainsi de suite. On appelle alors un étage de compression ou de détente, un moyen de compression ou de détente de la pluralité de moyens de compression ou de détente étagés. Avantageusement, lorsque le système comporte une pluralité d'étages de compression et/ou de détente, un moyen d'échange de chaleur est disposé entre chaque étage de compression et/ou de détente. Ainsi, l'air comprimé est refroidi entre chaque compression, ce qui permet d'optimiser le rendement de la compression suivante, et l'air détendu est chauffé entre chaque détente, ce qui permet d'optimiser le rendement de la détente suivante. Le nombre d'étages de compression et le nombre d'étages de détente peuvent être compris entre 2 et 10, de préférence entre 3 et 5. De préférence, le nombre d'étages de compression est identique au nombre d'étages de détente. Alternativement, le système AACAES selon l'invention peut contenir un seul moyen de compression et un seul moyen de détente. Selon une variante de réalisation de l'invention, les moyens de compression peuvent être réversibles, c'est-à-dire qu'ils peuvent fonctionner à la fois pour la compression et pour la détente. Ainsi, il est possible de limiter le nombre de dispositifs utilisés dans le système selon l'invention, ce qui permet un gain en poids et en volume du système selon l'invention. Pour cette variante de réalisation, les moyens d'échange de chaleur utilisés entre les étages de compression peuvent être ceux utilisés entre les étages de détente.

Le système selon l'invention est adapté à tout type de gaz, notamment pour l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé sera décrite. Toutefois, le système et le procédé sont valables pour tout autre gaz.

Les moyens d'échange de chaleur permettent, lors du stockage du gaz comprimé (compression), de récupérer un maximum de chaleur issue de la compression du gaz en sortie des compresseurs et de diminuer la température du gaz avant le passage à la compression suivante ou avant le stockage. Par exemple, le gaz comprimé peut passer d'une température supérieure à 150 °C, par exemple environ 190 °C à une température inférieure à 80 °C, par exemple environ 50 °C. Les moyens d'échange de chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C , par exemple enviro n 180 °C.

Selon un premier mode de réalisation de l'invention, les moyens de chauffage à volume constant du gaz comprimé sont intégrés dans les moyens de stockage du gaz comprimé. Ainsi, le chauffage à volume constant est réalisé directement dans le réservoir de stockage du gaz comprimé. Il peut être envisagé de chauffer une partie (cas ou les moyens de stockage sont formés par une pluralité de volumes de stockage) ou la totalité du gaz comprimé stocké. Le chauffage à volume constant peut être réalisé totalement ou partiellement par le fluide caloporteur utilisé dans les moyens d'échange de chaleur, et de préférence par le fluide caloporteur utilisé dans l'échangeur de chaleur disposé entre le dernier étage de compression et le moyen de stockage du gaz comprimé. De plus, le chauffage à volume constant peut être réalisé partiellement ou totalement par une source de chaleur externe, par exemple au moyen d'un brûleur. Ainsi, il est possible d'élever la température à une température supérieure de la température pouvant être fournie par le fluide caloporteur seul.

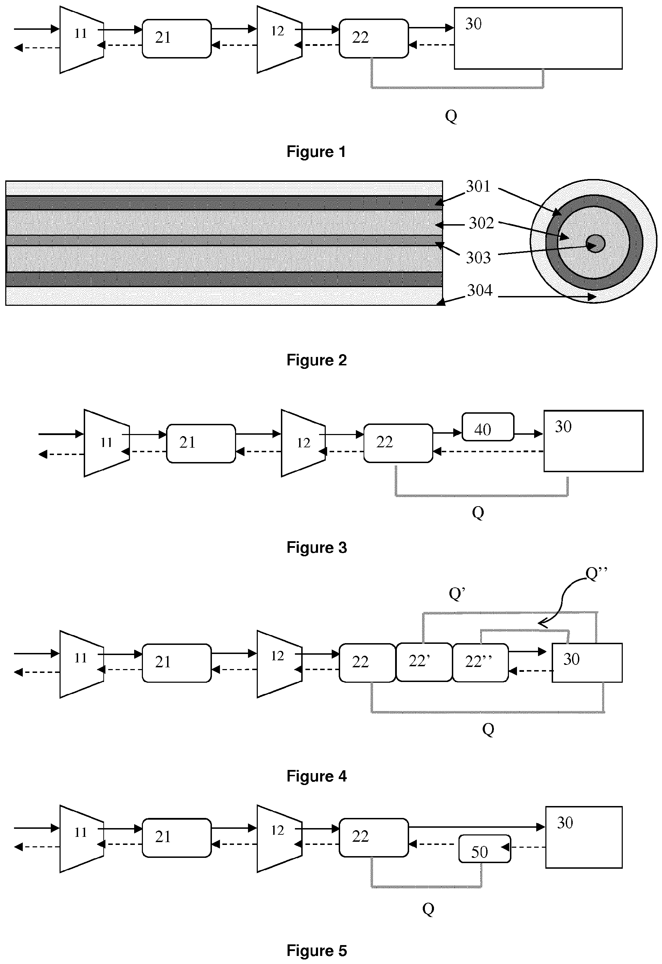

La figure 1 illustre un exemple de réalisation non limitatif de ce premier mode de réalisation selon l'invention. Cette figure illustre un système AACAES avec des moyens de compression étagés, comprenant deux étages de compression 11 et 12, et deux échangeurs de chaleur 21 et 22. Selon l'exemple illustré, les moyens de compression 11 et 12 sont réversibles et servent également de moyens de détente. Sur cette figure, la circulation de l'air lors du stockage de l'énergie (compression) est représentée par une flèche continue, et la circulation de l'air lors de la récupération de l'énergie (détente) est représentée par une flèche pointillée. Le système comporte un réservoir de stockage 30 du gaz comprimé. Un premier échangeur de chaleur 21 est intercalé entre les étages de compression/détente 11 et 12. Un deuxième échangeur de chaleur 22 est intercalé entre le deuxième étage de compression (premier étage de détente) et le réservoir 30. Classiquement, en phase de stockage d'énergie (compression), l'air est d'abord comprimé dans le premier compresseur 11, puis refroidi dans le premier échangeur de chaleur 21, puis comprimé dans le deuxième compresseur 12, et est ensuite refroidi dans le deuxième échangeur de chaleur 22. Le gaz comprimé et refroidi est stocké dans le réservoir 30. Le chauffage à volume constant du gaz comprimé est réalisé au sein du réservoir de stockage 30, au moyen d'un échange de chaleur Q avec le fluide caloporteur du deuxième échangeur de chaleur 22. Le fluide caloporteur du deuxième échangeur de chaleur 22 est chaud suite au refroidissement du gaz comprimé dans la phase de compression. Lors de la récupération de l'énergie (détente), le gaz comprimé stocké est donc d'abord chauffé à volume constant dans le réservoir 30 au moyen d'un échange de chaleur Q avec le fluide caloporteur du deuxième échangeur, puis, peut être chauffé dans l'échangeur de chaleur 22 (notamment si toute la chaleur stockée dans l'échangeur de chaleur 22 n'est pas utilisée pour le chauffage à volume constant). Ensuite, de manière classique, le gaz passe au travers d'un ou plusieurs étages de détente (deux étages selon l'exemple illustré en figure 1), avec un chauffage par le premier échangeur de chaleur 21 entre les deux étages de détente 12 et 11.

Le premier mode de réalisation n'est pas limité à l'exemple de la figure 1. D'autres configurations peuvent être envisagées : un nombre différent d'étages de compression et/ou de détente, l'utilisation de deux « circuits » distincts pour la compression et la détente, ...

Selon une conception du réservoir pour ce premier mode de réalisation de l'invention, le réservoir de stockage du gaz comprimé peut être formé par au moins une enveloppe extérieure permettant de résister à la pression du gaz comprimé après réchauffage. De plus, le réservoir peut disposer d'un ou plusieurs systèmes de transfert de chaleur situés en périphérie ou au coeur du réservoir d'air. La figure 2 illustre un tel exemple de conception du réservoir de stockage du gaz comprimé selon une section axiale et une section transversale. Dans cet exemple, l'air est stocké dans un réservoir de forme sensiblement cylindrique 302. Ce cylindre peut contenir un cylindre interne 303 et/ou un cylindre externe 301 dans lesquels circule un fluide caloporteur (monophasique ou polyphasique) dont le but est d'apporter la chaleur à l'air. Les parois du réservoir permettent de résister à la pression et idéalement de favoriser les transferts thermiques. Enfin, une isolation thermique 304 peut être ajoutée afin de minimiser les pertes thermiques durant le transfert de chaleur et après réchauffage.

Selon une variante de réalisation de ce premier mode de réalisation de l'invention, un refroidisseur supplémentaire peut être installé entre un échangeur de chaleur et le réservoir de stockage de gaz comprimé. Ce refroidisseur permet d'abaisser de manière plus importante la température de stockage du gaz comprimé ; ainsi la variation de pression obtenue lors du chauffage à volume constant est plus importante. La figure 3 illustre un exemple de réalisation non limitatif de cette variante de réalisation du premier mode de réalisation. Les éléments en commun avec l'exemple de la figure 1 ne sont pas décrits en détail. L'exemple de la figure 3 comprend un refroidisseur 40 disposé entre le deuxième échangeur de chaleur 22 et le réservoir de stockage 30 du gaz comprimé. Ainsi, le gaz comprimé en sortie du deuxième compresseur est refroidi une première fois dans l'échangeur de chaleur 22 par le fluide caloporteur, puis, est refroidi une deuxième fois par le refroidisseur 40. En sortie du refroidisseur 40, le gaz comprimé et refroidi est stocké dans le réservoir 30. Lors de la récupération de l'énergie (détente), le gaz comprimé stocké est d'abord chauffé à volume constant dans le réservoir 30 au moyen d'un échange de chaleur Q avec le fluide caloporteur du deuxième échangeur, puis, peut être chauffé dans l'échangeur de chaleur 22. Ensuite, de manière classique, le gaz passe au travers d'un ou plusieurs étages de détente (deux étages selon l'exemple illustré en figure 3).

Cette variante du premier mode de réalisation n'est pas limitée à l'exemple de la figure 3, d'autres configurations peuvent être envisagés : un nombre différent d'étages de compression et/ou détente, l'utilisation de deux « circuits » distincts pour la compression et la détente, ... Cette variante de réalisation peut avantageusement être combinée avec la conception du réservoir telle qu'illustrée à la figure 2.

Selon une autre variante de réalisation de ce premier mode de réalisation, l'échangeur de chaleur disposé entre le dernier étage de compression et le réservoir de stockage de gaz comprimé est un échangeur de chaleur étagé. Un échangeur étagé permet de stocker la chaleur en plusieurs étages de températures. Lors de la phase de récupération d'énergie (détente), la chaleur stockée dans chacun de ces étages, du plus froid au plus chaud, est utilisée pour chauffer l'air dans le réservoir (à volume constant). Cette réalisation permet une élévation de la température plus importante du gaz stocké dans le réservoir. Afin d'obtenir des étages de température quasi fixe ou fixe, il est avantageux d'utiliser un fluide caloporteur avec capsules de matériaux à changement de phase (MCP). Il peut être également avantageux que le fluide utilisé change de phase (liquide/gaz) durant le stockage et le déstockage de la chaleur. La figure 4 illustre un exemple de réalisation non limitatif de cette variante de réalisation du premier mode de réalisation. Les éléments en commun avec l'exemple de la figure 1, ainsi que le fonctionnement des éléments communs du système, ne sont pas décrits en détail. L'exemple de la figure 4 comprend un deuxième échangeur de chaleur étagé, comprenant les étages successifs 22, 22' et 22" (le nombre d'étages est non limitatif). Lors de la phase de stockage d'énergie (compression), le gaz en sortie du deuxième compresseur 12 est refroidi à une première température T22 par le premier étage de l'échangeur de chaleur, puis, est refroidi à une deuxième température T22' par le deuxième étage de l'échangeur de chaleur 22', la température T22' étant inférieure à la température T22. Ensuite, le gaz est refroidi à une température T22" par le troisième étage de l'échangeur de chaleur 22", la température T22" étant inférieure à la température T22'. En sortie du troisième étage 22" de l'échangeur de chaleur, le gaz comprimé et refroidi est stocké dans le réservoir 30. Lors de la récupération de l'énergie (détente), le gaz comprimé stocké est d'abord chauffé à volume constant dans le réservoir 30 au moyen d'un échange de chaleur Q" avec le fluide caloporteur du troisième étage 22" de l'échangeur de chaleur, puis au moyen d'un échange de chaleur Q' avec le fluide caloporteur du deuxième étage 22' de l'échangeur de chaleur, puis au moyen d'un échange de chaleur Q avec le fluide caloporteur du premier étage 22 de l'échangeur de chaleur. Ensuite, le gaz comprimé peut être chauffé dans l'échangeur de chaleur 22, 22', 22". Ensuite, de manière classique, le gaz passe au travers d'un ou plusieurs étages de détente.

Cette variante du premier mode de réalisation n'est pas limitée à l'exemple de la figure 4, d'autres configurations peuvent être envisagés : un nombre différent d'étages de compression et/ou détente, l'utilisation de deux « circuits » distincts pour la compression et la détente, .... Cette variante de réalisation peut avantageusement être combinée avec la variante de réalisation de la figure 3 et/ou la conception du réservoir telle qu'illustrée à la figure 2.

Selon un deuxième mode de réalisation de l'invention, le chauffage à volume constant du gaz est mis en oeuvre à l'extérieur du réservoir de stockage du gaz comprimé, notamment dans au moins une chambre de chauffage à volume constant. La chambre de chauffage à volume constant est externe au réservoir de stockage du gaz comprimé. Ce mode de réalisation permet de limiter le volume de gaz à chauffer, et de simplifier la conception du réservoir de stockage du gaz comprimé, car il n'a pas besoin de résister à une augmentation de la pression liée à ce chauffage, seule la chambre de chauffage, de volume limité, doit résister à cette pression. Afin de réaliser une récupération d'énergie continue, le système peut comprendre une pluralité de chambres de chauffage en parallèle. Ainsi, pendant qu'une portion du gaz est chauffée dans une chambre de chauffage, une autre portion de gaz peut être introduite dans une autre chambre de chauffage.

Le chauffage de la chambre de chauffage à volume constant peut être réalisé totalement ou partiellement par le fluide caloporteur utilisé dans les moyens d'échange de chaleur, de préférence par le fluide caloporteur utilisé dans l'échangeur de chaleur disposé entre le dernier étage de compression et le moyen de stockage du gaz comprimé. De plus, le chauffage à volume constant peut être réalisé partiellement ou totalement par une source de chaleur externe, par exemple au moyen d'un brûleur. Ainsi, il est possible d'élever la température à une température supérieure de la température pouvant être fournie par le fluide caloporteur seul.

La figure 5 illustre un exemple de réalisation non limitatif de ce deuxième mode de réalisation selon l'invention. Cette figure illustre un système AACAES avec des moyens de compression étagés, comprenant deux étages de compression 11 et 12, et deux échangeurs de chaleur 21 et 22. Tels qu'illustrés, les moyens de compression 11 et 12 sont réversibles et servent également de moyens de détente. Pour l'exemple illustré, la circulation de l'air lors du stockage de l'énergie (compression) est représentée par une flèche continue, et la circulation de l'air lors de la récupération de l'énergie (détente) est représentée par une flèche pointillée. Le système comporte un réservoir de stockage 30 du gaz comprimé. Les étapes de compression et de détente sont identiques aux étapes classiques de compression et de détente décrites en relation avec la figure 1. Le chauffage à volume constant du gaz comprimé est réalisé au sein d'une chambre de chauffage 50, au moyen d'un échange de chaleur Q avec le fluide caloporteur du deuxième échangeur de chaleur 22. La chambre de chauffage 50 est disposée entre le réservoir 30 et le deuxième échangeur de chaleur 22. Le fluide caloporteur du deuxième échangeur de chaleur 22 est chaud suite au refroidissement du gaz comprimé dans la phase de compression. Lors de la récupération de l'énergie (détente), une partie ou la totalité du gaz comprimé stocké est donc d'abord transféré dans la chambre de chauffage 50. Puis, le gaz est chauffé à volume constant dans la chambre de chauffage 50 au moyen d'un échange de chaleur Q avec le fluide caloporteur du deuxième échangeur, et peut ensuite être chauffé dans l'échangeur de chaleur 22. Puis, de manière classique, le gaz passe au travers d'un ou plusieurs étages de détente.

Le deuxième mode de réalisation n'est pas limité à l'exemple de la figure 5 et d'autres configurations peuvent être envisagés : un nombre différent d'étages de compression et/ou détente, l'utilisation de deux « circuits » distincts pour la compression et la détente, ... De plus, la chambre de chauffage à volume constant peut être de conception semblable à la variante de réalisation de la figure 2. En outre, les variantes de réalisation du premier mode de réalisation, notamment l'utilisation d'un refroidisseur et d'un échangeur de chaleur étagé, peuvent être combinées avec le deuxième mode de réalisation selon l'invention.

La présente invention concerne également un procédé de stockage et de récupération par gaz comprimé, dans lequel on réalise les étapes suivantes :
a) on comprime un gaz, notamment au moyen d'un compresseur d'air ;
b) on refroidit le gaz comprimé par échange de chaleur avec un fluide caloporteur, en particulier au moyen d'un échangeur de chaleur ;
c) on stocke le gaz comprimé refroidi, notamment par un moyen de stockage de gaz comprimé ;
d) on chauffe à volume constant le gaz comprimé stocké ;
e) une étape facultative (mise en oeuvre notamment si, à l'étape d), toute la chaleur du fluide caloporteur n'est pas utilisée) : on chauffe le gaz comprimé stocké par échange de chaleur avec le fluide caloporteur ; et
f) on détend le gaz comprimé chauffé pour générer une énergie, par exemple au moyen d'une turbine pour générer une énergie électrique.

Selon un aspect de l'invention, le procédé comporte plusieurs étapes de compression successives, au moyen de compresseurs d'air placés en série, également appelés compressions étagées. Dans ce cas, on réitère les étapes a) et b) pour chaque étage de compression. Ainsi, le gaz est comprimé et refroidi plusieurs fois.

Selon une caractéristique de l'invention, le procédé comporte plusieurs étapes de détente successives, par des moyens de détente placés en série, également appelés détentes étagées. Dans ce cas, on réitère les étapes e) et f) pour chaque étage de détente. Ainsi, le gaz est chauffé et détendu plusieurs fois.

L'étape a) concerne la compression d'un gaz, par exemple de l'air. Il peut s'agit notamment d'air prélevé dans le milieu ambiant.

L'étape b) permet de refroidir le gaz comprimé après chaque étape de compression, ce qui permet d'optimiser le rendement de la compression suivante et/ou le stockage d'énergie. L'étape b) est classiquement réalisée au moyen d'un échangeur thermique. Il peut notamment s'agir d'un échangeur thermique dans lequel le gaz et le fluide caloporteur circulent à contre-courant. Les moyens d'échange de chaleur permettent, lors du stockage du gaz comprimé (compression), de récupérer un maximum de chaleur issue de la compression du gaz en sortie des compresseurs et de diminuer la température du gaz avant le passage à la compression suivante ou avant le stockage. Par exemple, le gaz comprimé peut passer d'une température supérieure à 150 °C, par exemple environ 190 °C à une température inférieure à 80 °C , par exemple environ 50 °C.

L'étape c) peut être réalisée au sein d'un moyen de stockage du gaz comprimé, qui peut être un réservoir naturel ou non (par exemple une cavité souterraine). Le moyen de stockage du gaz comprimé peut être en surface ou en sous-sol. De plus, il peut être formé d'un unique volume ou d'une pluralité de volumes connectés entre eux ou non. Lors du stockage, on ferme le moyen de stockage du gaz comprimé.

Le gaz comprimé est stocké jusqu'au moment où on souhaite récupérer l'énergie stockée. L'étape d) et les suivantes sont réalisées au moment où on souhaite récupérer l'énergie stockée.

L'étape d) permet de chauffer le gaz comprimé stocké avant son passage dans les moyens de détente. La réalisation du chauffage à volume constant permet une augmentation de la température et de la pression du gaz avant la détente (l'augmentation induite de la pression peut se déduire notamment de la loi des gaz parfaits), ce qui permet une augmentation de l'énergie récupérée par le système et le procédé selon l'invention. En effet, lorsque l'on souhaite obtenir de l'énergie mécanique à partir d'un gaz chaud sous pression à travers une turbine, on peut considérer que la température chaude correspond à l'énergie disponible et que la haute pression correspond à la possibilité de récupérer l'énergie. Ainsi, un chauffage à volume constant (avec augmentation de la pression) est plus avantageux qu'un chauffage à pression constante, tel que réalisé dans un échangeur de chaleur. Afin d'éviter les pertes de chaleur, ce chauffage à volume constant est mis en oeuvre juste avant la récupération d'énergie lors de la phase de détente, ce qui correspond à la fin du stockage du gaz comprimé.

L'étape facultative e) permet de chauffer l'air comprimé avant chaque détente, ce qui permet d'optimiser le rendement de la détente suivante. L'étape e) est classiquement réalisée au moyen d'un échangeur thermique qui n'assure pas un volume constant lors de l'échange de chaleur. Pour l'étape e), on peut utiliser le fluide caloporteur qui a servir à refroidir lors de l'étape b). Les moyens d'échange de chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C , par exemple environ 180 °C.

Lors de l'étape f), le gaz comprimé est détendu. La détente du gaz comprimé permet de générer une énergie. Cette détente peut être réalisée au moyen d'une turbine qui génère une énergie électrique. Si le gaz est de l'air, l'air détendu peut être évacué dans le milieu ambiant.

Le chauffage à volume constant peut être réalisé partiellement ou totalement par le fluide caloporteur et/ou par une source de chaleur externe, tel qu'un brûleur.

Selon un premier mode de réalisation du procédé selon l'invention, ce chauffage à volume constant peut être réalisé au sein du réservoir de stockage du gaz comprimé. Dans ce cas, on peut faire circuler le fluide caloporteur au sein et/ou autour du moyen de stockage du gaz comprimé, de manière à permettre l'échange de chaleur. Le gaz peut être alors être immobile.

Selon un deuxième mode de réalisation du procédé selon l'invention, ce chauffage à volume constant peut être réalisé au sein d'une chambre de chauffage à volume constant, qui est externe au réservoir de stockage du gaz comprimé. Dans ce cas, on peut faire circuler le fluide caloporteur au sein et/ou autour de la chambre de chauffage à volume constant, de manière à permettre l'échange de chaleur. Le gaz peut être alors être immobile.

Le procédé selon l'invention peut être mis en oeuvre par le système selon l'une quelconque des variantes de l'invention décrites précédemment : avec ou sans utilisation d'un refroidisseur complémentaire pour refroidir de manière plus importante le gaz comprimé avant son stockage, et/ou avec ou sans utilisation d'un échangeur de chaleur étagé pour un chauffage étagé du gaz comprimé, et/ou avec ou sans utilisation d'un réservoir cylindrique avec cylindre interne et/ou externe dans lequel circule le fluide caloporteur, pour augmenter les échanges de chaleur.

Le procédé et le système selon l'invention peuvent être utilisés pour le stockage d'une énergie intermittente, telle que l'énergie éolienne ou solaire, afin de pouvoir utiliser cette énergie au moment désiré.

## Revendications

1. Système de stockage et de récupération d'énergie par gaz comprimé comprenant au moins un moyen de compression dudit gaz (11, 12), un moyen de stockage dudit gaz comprimé (30), au moins un moyen de détente (11, 12) dudit gaz comprimé apte à générer une énergie, des moyens d'échange de chaleur (21, 22) entre ledit gaz comprimé et un fluide caloporteur, et le système comporte en outre des moyens de chauffage à volume constant dudit gaz comprimé stocké, **caractérisé en ce que** lesdits moyens de chauffage à volume constant comprenant des moyens d'échange de chaleur entre ledit gaz comprimé stocké et ledit fluide caloporteur.

2. Système selon la revendication 1, dans lequel ledit moyen de stockage dudit gaz comprimé comprend au moins un réservoir (302) de forme sensiblement cylindrique comportant au moins un cylindre interne (303) et/ou externe (301) dans lequel circule ledit fluide caloporteur.

3. Système selon la revendication 1 ou 2, dans lequel lesdits moyens d'échange de chaleur disposés entre ledit moyen de compression (12) et ledit moyen de stockage dudit gaz comprimé (30) est un échangeur de chaleur étagé apte à stocker au moins ledit fluide caloporteur à différentes températures, lesdits moyens de chauffage à volume constant étant aptes à chauffer ledit gaz comprimé de manière successive par ledit fluide caloporteur stocké aux différentes températures.

4. Système selon l'une des revendications précédentes, dans lequel lesdits moyens de chauffage à volume constant sont intégrés dans ledit moyen de stockage du gaz comprimé (30).

5. Système selon l'une des revendications précédentes, dans lequel lesdits moyens de chauffage à volume constant comprennent au moins une chambre de chauffage (50) à volume constant, ladite chambre de chauffage (50) étant externe au moyen de stockage du gaz comprimé (30).

6. Système selon l'une des revendications précédentes, dans lequel lesdits moyens de chauffage à volume constant comprennent des moyens d'échange de chaleur avec une source de chaleur externe.

7. Système selon l'une des revendications précédentes, dans lequel ledit moyen de stockage du gaz comprimé (30) est constitué d'une pluralité de volumes de stockage connectés entre eux.

8. Système selon l'une des revendications précédentes, dans lequel ledit moyen de compression (11, 12) est réversible pour être utilisé en tant que moyen de détente (11, 12).

9. Système selon l'une des revendications précédentes, dans lequel le système comporte une pluralité de moyens de compression (11, 12) entre lesquels sont disposés des moyens d'échange de chaleur (21, 22), et une pluralité de moyens de détente (11, 12) entre lesquels sont disposés des moyens d'échange de chaleur (21, 22).

10. Système selon l'une des revendications précédentes, dans lequel lesdits moyens d'échange de chaleur (21, 22) sont des moyens d'échange de chaleur à pression constante.

11. Procédé de stockage et de récupération d'énergie par gaz comprimé, dans lequel on réalise les étapes suivantes :
a) on comprime un gaz ;
b) on refroidit le gaz comprimé par échange de chaleur avec un fluide caloporteur ;
c) on stocke le gaz comprimé refroidi et le procédé étant **caractérisé par** les étapes suivantes:
d) on chauffe à volume constant le gaz comprimé stocké, au moyen dudit fluide caloporteur ; et
e) on détend le gaz comprimé chauffé pour générer une énergie.

12. Procédé selon la revendication 11, dans lequel, pour l'étape de chauffage à volume constant du gaz, on fait circuler ledit fluide caloporteur dans un réservoir de stockage (30) du gaz comprimé de forme sensiblement cylindrique.

13. Procédé selon l'une des revendications 11 à 12, dans lequel l'étape de chauffage à volume constant du gaz est réalisée au sein d'un moyen de stockage du gaz comprimé (30).

14. Procédé selon l'une des revendications 11 à 12, dans lequel l'étape de chauffage à volume constant du gaz est réalisée au sein d'une chambre de chauffage (50) à volume constant externe à un moyen de stockage du gaz comprimé (30).

15. Procédé selon l'une des revendications 11 à 14, dans lequel l'étape de chauffage à volume constant du gaz est réalisée au moins partiellement au moyen d'une source de chaleur externe.

16. Procédé selon l'une des revendications 11 à 15, dans lequel le procédé comporte une étape de chauffage du gaz comprimé au moyen d'un fluide caloporteur avant l'étape de détente.

17. Procédé selon l'une des revendications 11 à 16, dans lequel les étapes de compression et de refroidissement sont répétées au moyen d'une pluralité de moyens de compression (11, 12) et de moyens d'échange de chaleur avec ledit fluide caloporteur (21, 22) et dans lequel l'étape de détente est répétée au moyen d'une pluralité de moyens de détente (11, 12) et de moyens d'échange de chaleur avec le fluide caloporteur (21, 22).

18. Procédé selon l'une des revendications 11 à 17, dans lequel on stocke ledit fluide caloporteur.

19. Procédé selon l'une des revendications 11 à 18, dans lequel on refroidit le gaz comprimé de manière étagée en stockant le fluide caloporteur à différentes températures, et on réalise l'étape de chauffage à volume constant par échanges de chaleur successifs avec le fluide caloporteur à différentes températures.

## Patentansprüche

1. System zum Speichern und Rückgewinnen von Energie durch komprimiertes Gas, umfassend mindestens ein Mittel zum Komprimieren des Gases (11, 12), ein Mittel zum Speichern des komprimierten Gases (30), mindestens ein Mittel zum Entspannen (11, 12) des komprimierten Gases, das geeignet ist, eine Energie zu erzeugen, Mittel zum Austauschen von Wärme (21, 22) zwischen dem komprimierten Gas und einer Wärmeträgerflüssigkeit, und das System weist ferner Mittel zum Erwärmen des gespeicherten komprimierten Gases bei konstantem Volumen auf, **dadurch gekennzeichnet, dass** die Mittel zum Erwärmen bei konstantem Volumen Mittel zum Austauschen von Wärme zwischen dem gespeicherten komprimierten Gas und der Wärmeträgerflüssigkeit aufweisen.

2. System nach Anspruch 1, wobei das Mittel zum Speichern des komprimierten Gases mindestens einen Behälter (302) von im Wesentlichen zylindrischer Form aufweist, der mindestens einen inneren (303) und/oder äußeren Zylinder (301) aufweist, in dem die Wärmeträgerflüssigkeit zirkuliert.

3. System nach Anspruch 1 oder 2, wobei die Mittel zum Austauschen von Wärme, die zwischen dem Mittel zum Komprimieren (12) und dem Mittel zum Speichern des komprimierten Gases (30) angeordnet sind, ein Stufenwärmetauscher sind, der geeignet ist, mindestens die Wärmeträgerflüssigkeit bei unterschiedlichen Temperaturen zu speichern, wobei die Mittel zum Erwärmen bei konstantem Volumen geeignet sind, das komprimierte Gas nacheinander durch die Wärmeträgerflüssigkeit, die bei unterschiedlichen Temperaturen gespeichert ist, zu erwärmen.

4. System nach einem der vorhergehenden Ansprüche, wobei die Mittel zum Erwärmen bei konstantem Volumen in dem Mittel zum Speichern des komprimierten Gases (30) integriert sind.

5. System nach einem der vorhergehenden Ansprüche, wobei die Mittel zum Erwärmen bei konstantem Volumen mindestens eine Heizkammer (50) bei konstantem Volumen aufweisen, wobei sich die Heizkammer (50) außerhalb des Mittels zum Speichern des komprimierten Gases (30) befindet.

6. System nach einem der vorhergehenden Ansprüche, wobei die Mittel zum Erwärmen bei konstantem Volumen Mittel zum Austauschen von Wärme mit einer externen Wärmequelle aufweisen.

7. System nach einem der vorhergehenden Ansprüche, wobei das Mittel zum Speichern des komprimierten Gases (30) aus mehreren miteinander verbundenen Speichervolumen besteht.

8. System nach einem der vorhergehenden Ansprüche, wobei das Mittel zum Komprimieren (11, 12) umkehrbar ist, um als Mittel zum Entspannen (11, 12) verwendet zu werden.

9. System nach einem der vorhergehenden Ansprüche, wobei das System mehrere Mittel zum Komprimieren (11, 12), zwischen denen Mittel zum Austauschen von Wärme (21, 22) angeordnet sind, und mehrere Mittel zum Entspannen (11, 12) aufweist, zwischen denen Mittel zum Austauschen von Wärme (21, 22) angeordnet sind.

10. System nach einem der vorhergehenden Ansprüche, wobei die Mittel zum Austauschen von Wärme (21, 22) Mittel zum Austauschen von Wärme bei konstantem Druck sind.

11. Verfahren zum Speichern und Rückgewinnen von Energie durch komprimiertes Gas, wobei die folgenden Schritte durchgeführt werden:
a) es wird Gas komprimiert,
b) das komprimierte Gas wird durch Wärmeaustausch mit einer Wärmeträgerflüssigkeit abgekühlt,
c) das komprimierte Gas wird gespeichert, und wobei das Verfahren durch die folgenden Schritte gekennzeichnet ist:
d) das gespeicherte komprimierte Gas wird mit konstantem Volumen mit Hilfe der Wärmeträgerflüssigkeit erwärmt und
e) das erwärmte komprimierte Gas wird entspannt, um eine Energie zu erzeugen.

12. Verfahren nach Anspruch 11, wobei für den Schritt des Erwärmens bei konstantem Volumen die Wärmeträgerflüssigkeit in einem Speicherbehälter (30) des komprimierten Gases von im Wesentlichen zylindrischer Form zirkulieren gelassen wird.

13. System nach einem der Ansprüche 11 bis 12, wobei der Schritt des Erwärmens bei konstantem Volumen in dem Mittel zum Speichern des komprimierten Gases (30) durchgeführt wird.

14. System nach einem der Ansprüche 11 bis 12, wobei der Schritt des Erwärmens bei konstantem Volumen des Gases in einer Heizkammer (50) bei konstantem Volumen außerhalb eines Mittels zum Speichern des komprimierten Gases (30) durchgeführt wird.

15. System nach einem der Ansprüche 11 bis 14, wobei der Schritt des Erwärmens bei konstantem Volumen des Gases mindestens teilweise mit Hilfe von einer externen Wärmequelle durchgeführt wird.

16. Verfahren nach einem der Ansprüche 11 bis 15, wobei das Verfahren einen Schritt des Erwärmens des komprimierten Gases mit Hilfe von einer Wärmeträgerflüssigkeit vor dem Schritt des Entspannens durchgeführt wird.

17. Verfahren nach einem der Ansprüche 11 bis 16, wobei die Schritte des Komprimierens und des Abkühlens mit Hilfe von mehreren Mitteln zum Komprimieren (11, 12) und mehreren Mitteln zum Austauschen von Wärme mit der Wärmeträgerflüssigkeit (21, 22) wiederholt werden, und wobei der Schritt des Entspannens mit Hilfe von mehreren Mitteln zum Entspannen (11, 12) und mehreren Mitteln zum Austauschen von Wärme mit der Wärmeträgerflüssigkeit (21, 22) wiederholt werden.

18. Verfahren nach einem der Ansprüche 11 bis 17, wobei die Wärmeträgerflüssigkeit gespeichert wird.

19. Verfahren nach einem der Ansprüche 11 bis 18, wobei das komprimierte Gas stufenweise abgekühlt wird, indem die Wärmeträgerflüssigkeit bei verschiedenen Temperaturen gespeichert wird, und der Schritt des Erwärmens bei konstantem Volumen durch aufeinanderfolgende Wärmeaustausche mit der Wärmeträgerflüssigkeit bei verschiedenen Temperaturen durchgeführt wird.

## Claims

1. A compressed gas energy storage and recovery system comprising at least one means (11, 12) for compressing said gas, a means for storing said compressed gas (30), at least one means (11, 12) for expanding said compressed gas suited to generate energy and means (21, 22) for heat exchange between said compressed gas and a heat carrier fluid, and the system further comprises means for heating said stored compressed gas at constant volume, **characterized in that** said constant volume heating means comprise means for heat exchange between said stored compressed gas and said heat carrier fluid.

2. A system as claimed in claim 1, wherein said means for storing said compressed gas include at least one tank (302) of substantially cylindrical shape comprising at least one inner (303) and/or outer (301) cylinder wherein said heat carrier fluid circulates.

3. A system as claimed in claim 1 or 2, wherein said heat exchange means arranged between said compression means (12) and said means (30) for storing said compressed gas is a staged heat exchanger suited to store at least said heat carrier fluid at different temperatures, said constant volume heating means being suited to heat said compressed gas successively by said heat carrier fluid stored at different temperatures.

4. A system as claimed in any one of the previous claims, wherein said constant volume heating means are integrated in said compressed gas storage means (30).

5. A system as claimed in any one of the previous claims, wherein said constant volume heating means comprise at least one constant volume heating chamber (50), said heating chamber (50) being exterior to compressed gas storage means (30).

6. A system as claimed in any one of the previous claims, wherein said constant volume heating means comprise means for heat exchange with an external heat source.

7. A system as claimed in any one of the previous claims, wherein said compressed gas storage means (30) consists of a plurality of storage volumes connected to each other.

8. A system as claimed in any one of the previous claims, wherein said compression means (11, 12) is reversible so as to be used as expansion means (11, 12).

9. A system as claimed in any one of the previous claims, wherein the system comprises a plurality of compression means (11, 12) between which heat exchange means (21, 22) are arranged, and a plurality of expansion means (11, 12) between which heat exchange means (21, 22) are arranged.

10. A system as claimed in any one of the previous claims, wherein said heat exchange means (21, 22) are constant pressure heat exchange means.

11. A compressed gas energy storage and recovery method, wherein the following steps are carried out:
a) compressing a gas,
b) cooling the compressed gas by heat exchange with a heat carrier fluid,
c) storing the cooled compressed gas,
the method being **characterized by** the following steps:
d) heating the stored compressed gas at constant volume, by means of said heat carrier fluid, and
e) expanding the heated compressed gas in order to generate energy.

12. A method as claimed in claim 11 wherein, for the step of heating the gas at constant volume, said heat carrier fluid is circulated in a compressed gas storage tank (30) of substantially cylindrical shape.

13. A method as claimed in any one of claims 11 to 12, wherein the step of heating the gas at constant volume is carried out in a compressed gas storage means (30).

14. A method as claimed in any one of claims 11 to 12, wherein the step of heating the gas at constant volume is carried out in a constant volume heating chamber (50) exterior to a compressed gas storage means (30).

15. A method as claimed in any one of claims 11 to 14, wherein the step of heating the gas at constant volume is carried out at least partly by means of an external heat source.

16. A method as claimed in any one of claims 11 to 15, wherein the method comprises a step of heating the compressed gas by means of a heat carrier fluid prior to the expansion step.

17. A method as claimed in any one of claims 11 to 16, wherein the compression and cooling steps are repeated using a plurality of compression means (11, 12) and of means (21, 22) for heat exchange with said heat carrier fluid, and wherein the expansion step is repeated using a plurality of expansion means (11, 12) and of means (21, 22) for heat exchange with the heat carrier fluid.

18. A method as claimed in any one of claims 11 to 17, wherein said heat carrier fluid is stored.

19. A method as claimed in any one of claims 11 to 18, wherein the compressed gas is cooled stagewise by storing the heat carrier fluid at different temperatures, and the constant volume heating step is carried out by successive heat exchanges with the heat carrier fluid at different temperatures.
